(19) Europäisches Patentamt
European Patent Office
Office européen des brevets

(11) **EP 2 884 244 B1**

(12) **EUROPÄISCHE PATENTSCHRIFT**

(45) Veröffentlichungstag und Bekanntmachung des Hinweises auf die Patenterteilung:
**20.09.2017 Patentblatt 2017/38**

(51) Int Cl.:
***G01F 1/84*** *(2006.01)*

(21) Anmeldenummer: **14195913.0**

(22) Anmeldetag: **02.12.2014**

(54) **Verfahren zum Betrieb eines Coriolis-Massedurchflussmessgeräts**

Method for operating a coriolis mass flowmeter

Procédé de fonctionnement d'un débitmètre massique Coriolis

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.12.2013 DE 102013020603**

(43) Veröffentlichungstag der Anmeldung:
**17.06.2015 Patentblatt 2015/25**

(73) Patentinhaber: **Krohne Messtechnik GmbH**
**47058 Duisburg (DE)**

(72) Erfinder:
• **Kolahi, Kourosh**
**47051 Duisburg (DE)**
• **Storm, Ralf**
**45131 Essen (DE)**

(74) Vertreter: **Gesthuysen Patent- und Rechtsanwälte**
**Patentanwälte**
**Huyssenallee 100**
**45128 Essen (DE)**

(56) Entgegenhaltungen:
**EP-A1- 0 758 443          WO-A1-01/01086**
**WO-A2-2007/095547**

## Beschreibung

Die Erfindung betrifft ein Verfahren zum Betreiben eines Coriolis-Massedurchflussmessgeräts mit wenigstens einer elektrischen Stelleinrichtung, wenigstens einem elektrischen Antrieb als Schwingungserzeuger, mit wenigstens einem mit einem Medium wechselwirkenden Messrohr und mit wenigstens einem Schwingungsaufnehmer, wobei die elektrische Stelleinrichtung ein elektrisches Anregungssignal zur Anregung des elektrischen Antriebs bereitstellt und der elektrische Antrieb das Messrohr zur Schwingung in wenigstens einer ersten Eigenform anregt, die angeregte Schwingung des Messrohrs von dem Schwingungsaufnehmer als Schwingungsmessgröße ($x, \dot{x}, \Delta t$) erfasst wird und wobei wenigstens eine mit dem Medium in Bezug stehende Mediumkenngröße ($\dot{m}$) mit Hilfe der Schwingungsmessgröße ($x, \dot{x}, \Delta t$) mittels einer Rechenvorschrift berechnet wird.

Coriolis-Massedurchflussmessgeräte und Verfahren zum Betreiben derartiger Durchflussmessgeräte sind seit langem in ganz unterschiedlicher Ausgestaltung bekannt, zum Beispiel aus WO20070195547 A2, EP0758843 A1 und WO0101086 A1. Mit Coriolis-Massedurchflussmessgeräten lassen sich hohe Messgenauigkeiten erzielen, die teilweise besser sind als 0,1 % vom Messwert, so dass Coriolis-Massedurchflussmessgeräte beispielsweise auch im eichpflichtigen Verkehr eingesetzt werden.

Die Funktionsweise von Coriolis-Massedurchflussmessgeräten beruht darauf, dass wenigstens ein von einem Medium durchströmtes Messrohr von einem Schwingungserzeuger zu einer Schwingung angeregt wird, wobei dieser Schwingungserzeuger häufig ein elektrischer Antrieb ist, der üblicherweise als elektromagnetischer Antrieb vorliegt. Bei einem solchen elektromagnetischen Antrieb wird eine Spule von einem elektrischen Strom als elektrisches Anregungssignal durchflossen, wobei mit dem Spulenstrom in Verbindung mit der Spule unmittelbar eine Kraftwirkung auf das Messrohr ausübbar ist. Die Funktionsweise von Coriolis-Massedurchflussmessgeräten beruht darauf, dass das massebehaftete Medium aufgrund der durch zwei orthogonale Bewegungen - die der Strömung und die des Messrohres - hervorgerufene Coriolis-Trägheitskraft auf die Wandung des Messrohres rückwirkt. Diese Rückwirkung des Mediums auf das Messrohr führt zu einer asymmetrischen Änderung der Messrohrgeschwindigkeit im Vergleich zu dem undurchströmten Schwingungszustand des Messrohres. Durch Erfassung dieser Besonderheiten der Schwingungen des durchströmten Coriolis-Messrohres - durch im Regelfall zwei versetzt auf dem Messrohr angeordnete Schwingungsaufnehmer - kann der Massedurchfluss durch das Messrohr mit hoher Genauigkeit bestimmt werden.

Von besonderer Bedeutung sind die Eigenfrequenzen der schwingfähigen Teile des Coriolis-Massedurchflussmessgeräts, im Wesentlichen also die Eigenfrequenzen des Messrohrs als Schwingelement, weil die Arbeitspunkte des Coriolis-Massedurchflussmessgeräts üblicherweise auf Eigenfrequenzen des Messrohres gelegt werden, um die erforderlichen Schwingungen für die Induktion der Coriolis-Kräfte mit einem minimalen Energieaufwand einprägen zu können. Die dann von dem Messrohr ausgeführten Schwingungen weisen eine bestimmte Form auf, die als Eigenform der jeweiligen Anregung bezeichnet wird. Ein weiterer Grund für die besondere Bedeutung von Eigenfrequenzen bei Coriolis-Massedurchflussmessgeräten ist die unmittelbare physikalische Verknüpfung zwischen der Eigenfrequenz des durchströmten Messrohrs und der effektiv ausgelenkten Schwingmasse (Messrohrmasse und Masse des Mediums im Messrohr); über diesen Zusammenhang kann beispielweise die Dichte des Mediums bestimmt werden.

Aus dem Stand der Technik ist bekannt, dass zur Anregung des Messrohrs von einem Regler ein harmonisches Basissignal als Reglerausgangssignal in Form einer sinusförmigen Spannung erzeugt wird und diese sinusförmige Spannung die elektrische Stelleinrichtung ansteuert, wobei die elektrische Stelleinrichtung die Aufgabe hat, an ihrem Ausgang eine entsprechende Leistung zur Verfügung zu stellen, um den elektrischen Antrieb in geeigneter Weise und mit ausreichender Leistung ansteuern zu können. Die elektrische Stelleinrichtung ist damit praktisch das leistungsmäßige Bindeglied zwischen dem Regler und dem elektrischen Antrieb des Coriolis-Massedurchflussmessgeräts. Üblicherweise sind bekannte Coriolis-Massedurchflussmessgeräte auch mit einem Schwingungsaufnehmer ausgestattet, mit dem die Schwingungen des Messrohrs erfasst werden, denn in der Schwingung des mit dem Medium wechselwirkenden Messrohres liegt die interessierende physikalische Information über das Medium, die hier als Mediumkenngröße bezeichnet wird, beispielsweise der Durchfluss, die Dichte und die Viskosität des Mediums. Im Regelfall sind wenigstens zwei Schwingungsaufnehmer auf dem Messrohr versetzt angeordnet, so dass die Bewegung des Messrohrs ein- und auslaufseitig erfasst wird. In diesem Fall könnten die Schwingungsmessgrößen mit ($x_l, x_r, \dot{x}_l, \dot{x}_r, \Delta t_{\dot{x}_l, \dot{x}_r}$) bezeichnet werden, also für den ein- und auslaufseitig angeordneten Schwingungsaufnehmer.

Zur Bestimmung der interessierenden Mediumkenngrößen wie auch zur Bestimmung von Kenngrößen des im Einsatz befindlichen Coriolis-Massedurchflussmessgeräts ist es bekannt, das Coriolis-Massedurchflussmessgeräte durch ein mathematisch-physikalisches Modell zu beschreiben und das Modell dann zur Bestimmung der interessierenden Parameter und Kenngrößen heranzuziehen. Dies ist beispielsweise beschrieben in der DE 100 02 635 A1 oder der DE 10 2011 100 092 A1.

Die gleichungsmäßige Beschreibung von Coriolis-Massedurchflussmessgeräten beruht vor allem auf einer Analyse der Schwingfähigkeit des Messrohrs, wobei die Schwingungen des Messrohres in unterschiedlichen Eigenformen jeweils durch eine Differentialgleichung zweiter Ordnung beschrieben werden, wobei die Differentialgleichungen für verschiedene Eigenformen untereinander gekoppelt sein können. Derartige gleichungsmäßige Beschreibung sind für verschiedene Typen von Coriolis-Massedurchflussmessgeräten möglich, für Geräte mit geraden oder gekrümmten Messrohren wie auch für Ein- und Mehrrohrausführungen; auch das weiter unten dargestellte erfindungsgemäße Verfahren ist auf alle Arten von Coriolis-Massedurchflussmessgeräten anwendbar. Die Anregung des Messrohrs erfolgt im Stand der Technik überwiegend mittels eines zentral auf das Messrohr einwirkenden elektrischen Aktuators (Single-Drive Coriolis-Massedurchflussmessgerät), der beide Messrohrhälften gleichphasig auslenkt und so die Schwingung des Messrohrs in der ersten Eigenform anregt; diese Anregung wird oft als Antriebs-Modus bezeichnet. Seltener wird das Messrohr durch zwei außermittig (gleichphasig oder gegenläufig) auf das Messrohr einwirkende elektrische Antriebe (Dual-Drive Coriolis-Massedurchflussmessgeräte) ausgelenkt, wodurch ein- und auslaufseitig eine gleichphasige oder eine gegenphasige Schwingung des Messrohrs in einer anderen Eigenform angeregt wird; der gegenphasige Schwingungsmodus wird oft als Coriolis-Modus bezeichnet.

Über Schwingungsaufnehmer, die oft elektromagnetisch realisiert sind, werden dann die - durch den Mediumstrom beeinflussten - Schwingungen des Messrohres messtechnisch erfasst, so dass bestimmte Schwingungsmessgrößen vorliegen, beispielsweise in Form der Auslenkung $x$ des Messrohres, der Messrohrgeschwindigkeit $\dot{x}$ oder auch in Form der daraus ableitbaren zeitlichen Phasenverschiebung $\Delta t$ zwischen der ein- und auslaufseitigen Schwingung des Messrohrs.

Unter bestimmten vereinfachenden Annahmen ist darstellbar, dass in guter Näherung ein durch eine Geradengleichung beschreibbarer Zusammenhang besteht zwischen dem Massedurchfluss durch das Messrohr und der Phasendifferenz - entspricht der Zeitdifferenz - zwischen den ein- und auslaufseitigen Schwingungen des Coriolis-Messrohrs. Demzufolge lässt sich ein Coriolis-Massedurchflussmessgerät hinsichtlich seiner Massedurchflusseigenschaften in guter Näherung durch die Parameter Nullpunkt und Empfindlichkeit beschreiben. Dabei gibt der Nullpunkt die Phasen- bzw. Zeitdifferenz zwischen der ein- und auslaufseitigen Schwingung bei Nulldurchfluss an und gibt die Empfindlichkeit die Steigung der Geraden an, also das Verhältnis von Massedurchflussänderung zu Phasenänderung - also zur Änderung der Zeitdifferenz - zwischen den ein- und auslaufseitigen Schwingungen.

In der Praxis ist es so, dass zahlreiche Querempfindlichkeiten (Störgrößen) existieren, die zu einer Abweichung des tatsächlichen Verhaltens von dem aufgezeigten einfachen bzw. vereinfachten mathematisch-physikalischen Zusammenhang führen. Derartige Störgrößen sind beispielsweise die Temperatur und Temperaturgradienten entlang des Messrohrs, axiale Spannungen im Messrohr, die Fluiddichte, der Prozessdruck und die Korrosion und Abbrasion des Messrohrs. Bei der Auslegung und auch beim Betrieb von Coriolis-Massedurchflussmessgeräten wird angestrebt, die Wirkung der Störgrößen auf die Eigenschaften des Coriolis-Massedurchflussmessgeräts - wie Nullpunkt und Empfindlichkeit - zu unterdrücken. Dies ist aufwendig und gelingt auch nicht vollständig, so dass die Eigenschaften der Coriolis-Massedurchflussmessgeräte mehr oder weniger von den genannten Störgrößen beeinflusst werden. Damit erhöht sich die Messunsicherheit der Messwerte für den Massedurchfluss und auch andere Mediumkenngrößen.

Einen gewöhnlichen Ausweg bieten sensorgestützte Verfahren, bei denen ausgewählte Störgrößen über zusätzliche Sensoren gemessen werden, wobei daraus phänomenologische Korrekturfaktoren abgeleitet und damit die Messwerte für den Massedurchfluss und andere Mediumkenngrößen korrigiert werden. Beispielsweise werden Temperaturen über Temperatursensoren und mechanische Spannungen über Dehnungsmessstreifen an vorbestimmten Stellen der Messrohre gemessen und die so ermittelten Messwerte für die Störgrößen über vorbestimmte funktionale Zusammenhänge zur Korrektur der Messwerte verwendet.

Leider können die sensorgestützten Methoden und Verfahren nicht alle Einflüsse der oben genannten Störgrößen erfassen und vollständig unterdrücken, da zum einen nicht für alle Störgrößen dedizierte Sensoren eingebaut werden können und zum anderen funktionale Zusammenhänge zwischen Querempfindlichkeiten und Messgrößen bei verschiedenen Einsatzbedingungen der Messgeräte nicht vollständig bekannt sind oder mit erträglichem Aufwand nicht mathematisch beschreibbar und/oder berechenbar sind. Beispielsweise kann der Einfluss der Temperaturgradienten auf die Empfindlichkeit und den Nullpunkt des Coriolis-Massedurchflussmessgeräts nicht einfach beschrieben werden. Hinzu kommt, dass die heranzuziehenden funktionalen Zusammenhänge auch abhängig sind von der individuellen Konstruktion des betreffenden Massedurchflussmessgeräts.

Aufgabe der vorliegenden Erfindung ist es, den Einfluss der Störgrößen auf die Messwerte bzw. auf die mit der Rechenvorschrift zu ermittelnden Mediumkenngrößen zu verringern.

Die zuvor hergeleitete und aufgezeigte Aufgabenstellung wird bei dem eingangs beschriebenen Verfahren zum Betreiben eines Coriolis-Massedurchflussmessgerät dadurch gelöst, dass während des Betriebs des Coriolis-Massedurchflussmessgeräts die Eigenfrequenz $f_{01}$ der Schwingung des Messrohrs in der ersten Eigenform bestimmt wird, dass während des Betriebs des Coriolis-Massedurchflussmessgeräts die Eigenfrequenz $f_{02}$ der Schwingung des Messrohrs in wenigstens einer zweiten Eigenform bestimmt wird, dass die Rechenvorschrift einen mathematischen Zusammenhang zwischen der Schwingungsmessgröße $\Delta t$, der Mediumkenngröße $\dot{m}$ und den Eigenfrequenzen $f_{01}$, $f_{02}$ der Schwingungen des Messrohrs in der ersten Eigenform und der zweiten Eigenform herstellt und dass die Mediumkenngröße $\dot{m}$ unter Berücksichtigung der aktuell bestimmten *Eigenfrequenzen $f_{01}$, $f_{02}$* der Schwingungen des Messrohrs in der ersten Eigenform und der zweiten Eigenform sowie der Schwingungsmessgröße $\Delta t$ bestimmt wird.

Dem erfindungsgemäßen Verfahren liegt die Erkenntnis zugrunde, dass sich viele Störgrößen auf die Eigenfrequenzen der Schwingung des Messrohrs in der jeweiligen Eigenform auswirken, so dass die fortwährende Nachverfolgung der Eigenfrequenz der jeweiligen verwendeten Eigenform bzw. die fortwährende Nachverfolgung eines vorbestimmten mathematischen Zusammenhangs zwischen den Eigenfrequenzen der verwendeten Eigenformen (z. B. das Verhältnis der Eigenfrequenzen) eine wichtige Aussage über den Einfluss der Störgrößen macht. Unabhängig von den individuellen funktionalen Zusammenhängen, die zwischen einzelnen Störgrößen, Schwingungsmessgrößen und Mediumkenngrößen bestehen, sind die Einflüsse in Summe durch die Nachverfolgung der Eigenfrequenzen der Schwingung des Messrohres in den beobachteten Eigenformen bzw. durch die Nachverfolgung des vorbestimmten mathematischen Zusammenhangs zwischen den Eigenfrequenzen der verwendeten Eigenformen integral beobachtbar.

Dabei ist von Bedeutung, dass nicht nur eine einzige Eigenfrequenz - nämlich die Eigenfrequenz $f_{01}$ der Schwingung des Messrohrs in der ersten Eigenform - bestimmt und nachverfolgt wird, von Bedeutung ist, dass auch die Eigenfrequenz $f_{02}$ der Schwingung des Messrohrs in einer zweiten Eigenform bestimmt wird, so dass auch das Verhältnis der beiden Eigenfrequenzen zueinander in der Rechenvorschrift berücksichtigt werden kann. Durch die fortwährende Messung der Eigenfrequenzen während des Betriebs des Coriolis-Massedurchflussmessgeräts werden auch fortwährend die integralen Einflüsse der Störgrößen und die Querempfindlichkeiten messtechnisch abgebildet und können durch die herangezogene Rechenvorschrift bei der Ermittlung der Mediumkenngrößen berücksichtigt werden, ohne dass die einzelnen funktionalen Zusammenhänge der Wirkung verschiedener Störgrößen auf die Mediumkenngrößen und ihre Abhängigkeiten untereinander bekannt sein müssen, was die Korrektur der Berechnung der Mediumkenngrößen in erheblicher Weise vereinfacht. Die Bezeichnung "erste" Eigenform und "zweite" Eigenform ist nicht streng numerisch in dem Sinne zu verstehen, dass die erste Eigenform die niederfrequenteste Schwingung - also die Grundschwingung - und die zweite Eigenform die nächstmögliche Oberschwingung bezeichnet; dies mag in vielen Fällen so sein, es kann aber auch nur mit verschiedenen Oberschwingungen gearbeitet werden oder mit der Grundschwingung und einer Oberschwingung höheren Grades.

Gemäß einer bevorzugten Ausgestaltung des erfindungsgemäßen Verfahrens ist vorgesehen, dass die Eigenfrequenz $f_{01}$ der Schwingung des Messrohrs in der ersten Eigenform und oder dass die Eigenfrequenz $f_{02}$ der Schwingung des Messrohrs in der zweiten Eigenform bestimmt wird durch gezielte Anregung des Messrohrs in einem Phasenregelkreis, durch den eine feste Phasenverschiebung zwischen der Anregungsgröße und der Reaktionsgröße eingestellt wird, insbesondere unter Kenntnis des Zusammenhangs zwischen diesen Größen im Resonanzfall. Konkreter kann dies gedeuten, dass die Phasenverschiebung zwischen der Antriebskraft des elektrischen Antriebs und der über den Schwingungsaufnehmer erfassten Geschwindigkeitsantwort des Messrohres über eine Variation der Frequenz des Anregungssignals auf einen vorbestimmten Wert geregelt wird. Bei einem elektromagnetischen Antrieb steht der Antriebstrom in direktem Zusammenhang zu der Kraftwirkung. Im Idealfall wird die Phasenverschiebung zwischen der Anregungsgröße und der Messrohrgeschwindigkeit auf 0° eingeregelt, da hier der Resonanzfall mit der Schwingung in der Eigenfrequenz vorliegt.

Die Schwingung des Messrohrs in der zweiten Eigenform kann angeregt werden durch den direkten Einsatz des elektrischen Antriebs, mit dem die Bewegung in der zweiten Eigenform aufgeprägt wird. Bevorzugt ist jedoch vorgesehen, dass die Schwingung des Messrohrs in der zweiten Eigenform indirekt angeregt wird durch die aktive Anregung des Messrohrs in der ersten Eigenform. Dies kann geschehen aufgrund von strukturellen Asymmetrien im Aufbau des Coriolis-Massedurchflussmessgeräts, die eine - praktisch kaum zu vermeidende - Kopplung der Schwingungen des Messrohrs in der ersten Eigenform und weiteren Eigenformen bewirkt. Die Anregung in der Schwingung der zweiten Eigenform kann alternativ oder zusätzlich aber auch erfolgen durch den Prozess selbst, also über die Strömung des Mediums oder über mechanische Anregungen des Coriolis-Massedurchflussmessgeräts über die Anschlussstellen in der Rohrleitung. Vorzugsweise wird auch die Eigenfrequenz der zweiten Eigenform - unabhängig davon, wie sie angeregt wird - über einen Phasenregelkreis verfolgt. Dazu wird vorteilhaft a priori Wissen verwendet über den Zusammenhang zwischen den Eigenfrequenzen der Messrohrschwingungen in der ersten Eigenform und der zweiten Eigenform, so dass der Suchbereich des Phasenregelkreises auf einen sinnvollen Bereich eingeschränkt werden kann.

Gemäß einer weiteren vorteilhaften Ausgestaltung des Verfahrens ist vorgesehen, dass die Rechenvorschrift als integrale Korrekturfunktion $f_{IK}$ einen Term in den Eigenfrequenzen $f_{01}$, $f_{02}$ der Schwingungen des Messrohrs in der ersten Eigenform und der zweiten Eigenform aufweist. Das bedeutet, dass abgesehen von der sonstigen Formulierung der Rechenvorschrift zur Bestimmung von Mediumkenngrößen oder sonstigen Parametern die Rechenvorschrift jedenfalls einen Term aufweist, auf den sich die Werte der Eigenfrequenzen $f_{01}$, $f_{02}$ auswirken, so dass dieser Term tatsächlich die Bedeutung einer Korrekturfunktion hat, da sich der Einfluss der Störgrößen integral in den fortwährend nachverfolgten Werten für die Eigenfrequenzen $f_{01}$, $f_{02}$ der Schwingung des Messrohres niederschlagen. Insbesondere wird eine solche gleichungsmäßige Formulierung bevorzugt, bei der die Rechenvorschrift keine weiteren Abhängigkeiten von den Eigenfrequenzen $f_{01}$, $f_{02}$ der Schwingungen des Messrohrs in der ersten Eigenform und der zweiten Eigenform aufweist, so dass die Einflüsse auf den beschriebenen Term beschränkt sind.

Im Einzelnen gibt es nun verschiedene Möglichkeiten, das erfindungsgemäße Verfahren auszugestalten und weiterzubilden. Dazu wird verwiesen auf die dem Patentanspruch 1 nachgeordneten Patentansprüche und auf die Beschreibung bevorzugter Ausführungsbeispiele in Verbindung mit der Zeichnung. In der Zeichnung zeigen

Fig. 1 schematisch die Struktur eines Coriolis-Massedurchflussmessgeräts, wie es aus dem Stand der Technik bekannt ist, wie es aber auch für das erfindungsgemäße Verfahren Verwendung finden kann,

Fig. 2 ein Ausführungsbeispiel des erfindungsgemäßen Verfahrens zum Betrieb eines Coriolis-Massedurchflussmessgeräts in Blockschaltbilddarstellung,

Fig. 3 die Amplitudengänge für die Schwingungen eines Messrohrs in einer ersten Eigenform und in einer zweiten Eigenform und

Fig. 4 das Amplitudendiagramm und das Phasendiagramm für die Schwingung des Messrohrs eines Coriolis-Massedurchflussmessgeräts in einer ersten Eigenform bei verschiedenartigen Medien.

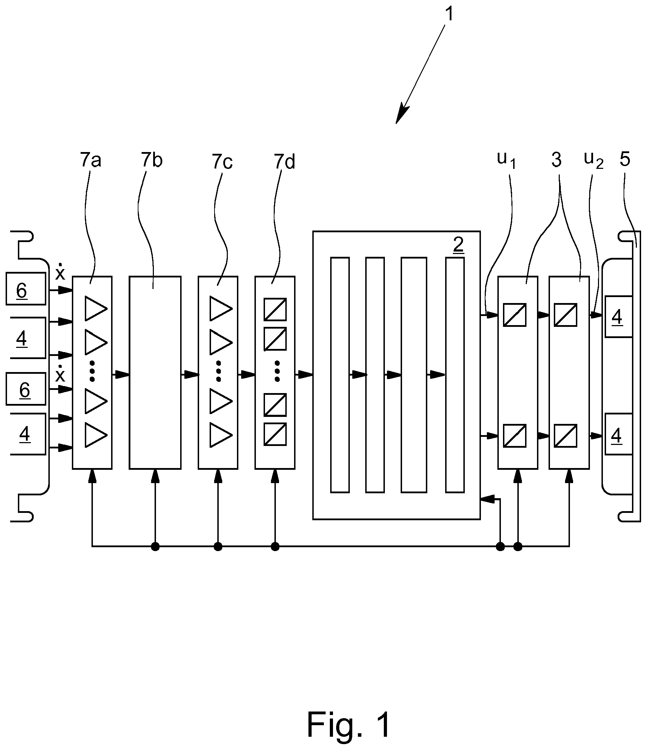

In Fig. 1 ist zunächst schematisch dargestellt ein Coriolis-Massedurchflussmessgerät 1 mit einem in einem digitalen Signalprozessor implementierten Regler 2, einer elektrischen Stelleinrichtung 3 und elektrischen Antrieben 4 als Schwingungserzeuger. Die elektrische Stelleinrichtung 3 erzeugt ein elektrisches Anregungssignal $u_2$ zur Anregung des elektrischen Antriebs 4, wobei der elektrische Antrieb 4 das Messrohr 5 zur Schwingung in einer ersten Eigenform anregt. Die angeregte Schwingung des Messrohrs 5 wird von Schwingungsaufnehmern 6 als Schwingungsmessgröße erfasst, wobei als Schwingungsmessgröße zunächst die Messrohrgeschwindigkeit $\dot{x}$ erfasst wird. Aus den ein- und auslaufseitigen Messrohrgeschwindigkeiten wird dann als abgeleitete Schwingungsmessgröße die zeitliche Phasendifferenz, also der Zeitversatz $\Delta t$ ermittelt.

In Fig. 1 ist das Coriolis-Massedurchflussmessgerät 1 zweigeteilt dargestellt. Das tatsächlich eine Einheit bildende Coriolis-Massedurchflussmessgerät 1 endet zu einer Hälfte am rechten Rand der Figur und beginnt aus Gründen der übersichtlichen Darstellung mit der anderen Hälfte wieder am linken Rand der Figur. Dort ist zu erkennen, dass das Coriolis-Massedurchflussmessgerät 1 über Schwingungsaufnehmer 6 verfügt, die als Schwingungsmessgröße Geschwindigkeitssignale $\dot{x}$ des Messrohrs liefern. An die Schwingungsaufnehmer 6 schließt sich eine Mehrzahl von Übertragungselementen an, die im Wesentlichen der Signalaufbereitung dienen, wie beispielsweise eine aus Verstärkern bestehende Anpassungselektronik 7a, ein Hardwaremultiplexer 7b zur Realisierung verschiedener umschaltbarer Messkanäle, eine weitere Anpassungselektronik 7c und ein Analog/Digital-Wandler 7d, der die analogen gemessenen Signale dem Regler 2 in Form digitaler Signale wieder zuführt. In dem digitalen Signalprozessor 2 wird schließlich auch eine mit dem Medium in Bezug stehende Mediumkenngröße - vorliegend der Massedurchfluss $\dot{m}$ - mit Hilfe der (abgeleiteten) Schwingungsmessgröße $\Delta t$ mittels einer Rechenvorschrift berechnet.

Die Rechenvorschrift basiert auf einer mathematischen Modellbildung des Coriolis-Massedurchflussmessgeräts 1, wobei im nachfolgend dargestellten Fall das Messrohr 5 in Form von schwingfähigen Masse-Feder-Dämpfung-Systemen modellhaft nachgebildet werden, so dass die Eigenformen, in denen das Messrohr 5 zur Schwingung angeregt wird, in guter Näherung jeweils durch eine Übertragungsfunktion zweiter Ordnung beschrieben werden können. Auf das Coriolis-Massedurchflussmessgerät 1 wirkt eine Vielzahl von Störgrößen ein, die in einer Rechenvorschrift funktional nur mit großem Aufwand oder nur unvollständig berücksichtigt werden können. Bei derartigen Störgrößen handelt es sich beispielsweise um die Temperatur des Messrohrs 5, sich über den Verlauf des Messrohres entwickelnde Temperaturgradienten, mechanische Spannungen im Messrohr 5 usw. Wenn der Einfluss dieser Störgrößen auf das Schwingungsverhalten des Coriolis-Massedurchflussmessgeräts 1 funktional bekannt ist, werden die Störgrößen im Stand der Technik üblicherweise messtechnisch durch geeignete Sensoren erfasst, so dass der Einfluss der Störgrößen im Rahmen der Genauigkeit der Rechenvorschrift korrigiert werden kann. Es ist ohne Weiteres ersichtlich, dass diese Vorgehensweise beliebig aufwendig sein kann.

Dem erfindungsgemäßen Verfahren liegt die Erkenntnis zugrunde, dass sich viele Störgrößen auf die Eigenfrequenz $f_{01}$, $f_{02}$ des in einer bestimmten Eigenform zur Schwingung angeregten Messrohres 5 auswirkt, so dass die sich ändernden Eigenfrequenzen $f_{01}$, $f_{02}$ - und vor allem das Verhältnis der Eigenfrequenzen - der Eigenformen der Messrohrschwingung einen integralen Indikator für Störgrößen und die Auswirkung von Querempfindlichkeiten sind. Wenn es gelingt, in der Rechenvorschrift einen mathematischen Zusammenhang zwischen der erfassten oder abgeleiteten Schwingungsmessgröße, der interessierenden Mediumkenngröße und den Eigenfrequenzen $f_{01}$, $f_{02}$ der Schwingungen des Messrohrs 5 in den verwendeten Eigenformen herzustellen, dann ermöglicht die fortwährende Erfassung der Eigenfrequenzen $f_{01}$, $f_{02}$ der Schwingung des Messrohrs 5 in den verwendeten Eigenformen die Möglichkeit einer fortwährend korrigierten und korrekten Berechnung der interessierenden Mediumkenngrößen.

Insoweit ist bei dem erfindungsgemäßen Verfahren vorgesehen, dass während des Betriebs des Coriolis-Massedurchflussmessgeräts 1 die Eigenfrequenz $f_{01}$ der Schwingung des Messrohres 5 in der ersten Eigenform bestimmt wird, das ferner während des Betriebs des Coriolis-Massedurchflussmessgeräts 1 die Eigenfrequenz $f_{02}$ der Schwingung des Messrohrs 5 in einer zweiten Eigenform bestimmt wird das eine solche Rechenvorschrift verwendet wird, die einen mathematischen Zusammenhang zwischen der Schwingungsmessgröße $\Delta t$, der Mediumkenngröße $\dot{m}$ und den Eigenfrequenzen $f_{01}$, $f_{02}$ der Schwingungen des Messrohrs 5 in der ersten Eigenform und der zweiten Form herstellt, wobei dann abschließend die Mediumkenngröße $\dot{m}$ unter Berücksichtigung der aktuell bestimmten Eigenfrequenzen $f_{01}$, $f_{02}$ der Schwingungen des Messrohrs 5 in der ersten Eigenform und der zweiten Eigenform sowie der Schwingungsmessgröße $\Delta t$ bestimmt wird.

Nachfolgend ist exemplarisch die gleichungsmäßige Beschreibung der Messrohrschwingung in einer ersten Eigenform dargestellt, wobei die Bewegungsgleichung auf einem Masse-Dämpfer-Feder-System beruht und die Kraft-Geschwindigkeits-Übertragungsfunktion für die erste Eigenform (Antriebsmodus) darstellt:

$$G_1(s) = \frac{V_1(s)}{F_1(s)} = \frac{k_1 s}{s^2 + 2 d_1 \omega_{01} s + \omega_{01}^2}$$

mit

$$V_1(s) = \dot{X}_1(s), F_1(s) = F_\ell(s) + F_r(s),$$

$$k_1 = \frac{1}{m_\ell + m_r}, \; d_1 = \frac{d_\ell + d_r}{2\sqrt{(c_\ell + c_r)(m_\ell + m_r)}}, \; \omega_{01} = \sqrt{\frac{c_\ell + c_r}{m_\ell + m_r}}$$

Entsprechend lässt sich die Bewegungsgleichung für die Schwingung des Messrohrs 5 in der zweiten Eigenform (Coriolis-Modus) beschreiben:

$$G_2(s) = \frac{V_2(s)}{M_2(s)} = \frac{k_2 s}{s^2 + 2 d_2 \omega_{02} s + \omega_{02}^2}$$

mit

$$V_2(s) = \dot{X}_2(s), \; k_2 = \frac{1}{m_\ell L_\ell^2 + m_r L_r^2}, \; d_2 = ..., \; \omega_{02} = ...$$

Bei den dargestellten Gleichungen stehen die Indizes 1 und r für die Größen der linken und rechten Messrohrhälfte, wobei m für die Masse, d für die Dämpfung und c für die Federsteifigkeiten stehen. Bei $\omega_{01}$ und $\omega_{02}$ handelt es sich um die Eigenkreisfrequenzen der ersten Eigenform und der zweiten Eigenform, die sich von den Eigenfrequenzen $f_{01}$, $f_{02}$ nur um den konstanten Faktor $2\pi$ unterscheiden.

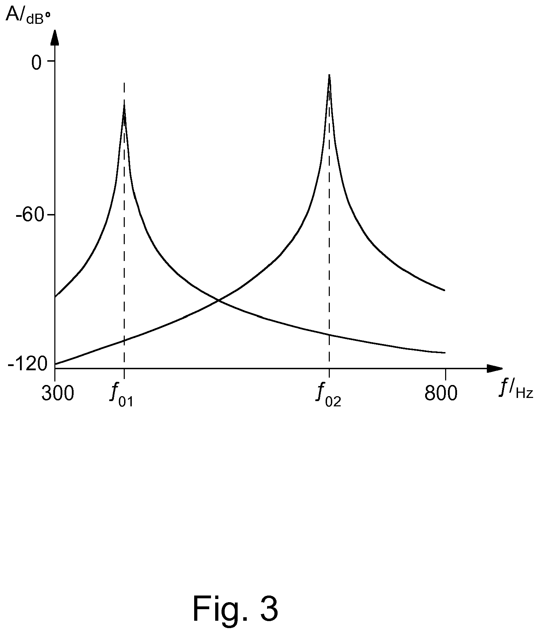

Fig. 3 zeigt typische Amplitudengänge von einem Coriolis-Messrohr 5 für Schwingungen in zwei verschiedenen Eigenformen. Die Schwingungen zeigen die typische Amplitudenüberhöhung bei den Eigenfrequenzen $f_{01}$ und $f_{02}$. Durch die Bewegung des Messrohrs 5 in der ersten Eigenform in Verbindung mit dem durch das Messrohr 5 strömenden Massestrom werden Coriolis-Kräfte bzw. Coriolis-Kraftpaare induziert, die die zweite Eigenform anregen. Die Betriebsfrequenz liegt sowohl aus energietechnischen wie auch aus messtechnischen Gründen in der Regel an der Eigenfrequenz der ersten Eigenform (Antriebsmodus). An dieser Frequenz werden üblicherweise auch die induzierten Coriolis-Kraftpaare über die zweite Eigenform (Coriolis-Modus) gemessen.

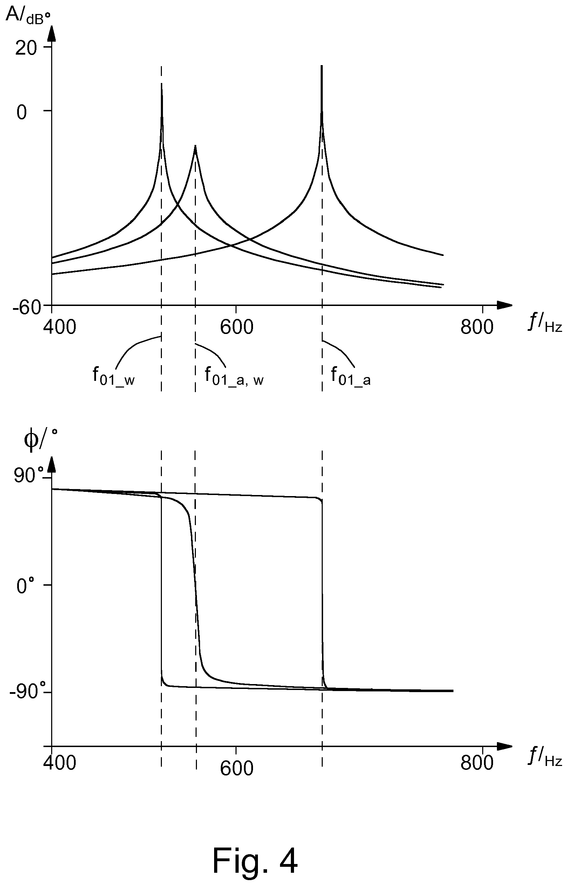

Die Eigenfrequenzen $f_{01}$, $f_{02}$ der verschiedenen Eigenformen und andere Parameter des Messrohres 5 ändern sich in Abhängigkeit von einer Vielzahl von Einflussgrößen. Hierzu gehören unter anderem die Fluiddichte, das Füllen und Entleeren des Gerätes wie auch der Betrieb bei Teilfüllung, die Mehrphasenströmung, die Viskosität, die Temperatur der Strömung, die Temperatur und Temperaturgradienten der Umgebung, der Betriebsdruck und Druckgradienten entlang des Messrohrs 5, mechanische Spannungen an dem Messrohr 5, externe Vibrationen, Pumpenpulsationen sowie Erosion und Korrosion des Messrohres 5 sowie Ablagerungen am Messrohr. Beispielsweise ändern sich auch die Steifigkeiten der Eigenformen durch Temperatur und Temperaturgradienten sowie durch die auf das Messrohr 5 einwirkenden mechanischen Spannungen, die beispielsweise durch den Prozessdruck verursacht sind. Diese Einfluss- bzw. Störgrößen können dazu führen, dass sich die Frequenzgänge der Eigenformen des Messrohres 5 sowohl absolut als auch relativ zueinander verschieben. Dies ist in Fig. 4 veranschaulicht, in der der Einfluss der Fluiddichte auf das Schwingverhalten des Messrohrs 5 in der ersten Eigenform (Antrieb-Modus) dargestellt ist. Der ganz rechte Kurvenverlauf ist der Frequenzgang des Messrohres 5 bei einer Füllung mit Luft (Eigenfrequenz $f_{01\_a}$), der mittlere Frequenzgang liegt vor bei einer Mehrphasenströmung von Wasser mit Luft (Eigenfrequenz $f_{01\_a,w}$), der ganz linke Frequenzgang zeigt das Schwingverhalten bei einer einphasigen Wasserströmung (Eigenfrequenz $f_{01\_w}$). Es ist deutlich zu erkennen, dass sich die hier exemplarisch aufgegriffene Störung in Form des Wechsels zwischen Ein- und Mehrphasenströmung in der Eigenfrequenz der Schwingung ein- und derselben Eigenform niederschlägt.

Nachfolgend wird beispielhaft der gewöhnliche Fall betrachtet, dass die erste Eigenform als Antriebs-Modus und die zweite Eigenform als Mess-Modus dienen. Unter der Annahme, dass die Eigenformen in guter Näherung wie vorstehend dargestellt durch eine Übertragungsfunktion zweiter Ordnung beschrieben werden können, kann aus den angegebenen Gleichungen als Messgleichung die folgende Beziehung für die Empfindlichkeit und den Nullpunkt des Coriolis-Massedurchflussmessgeräts erhalten werden:

$$\Delta t \approx \frac{1}{\omega_{01}} \cdot \frac{\text{Re}\{V_1\}\text{Im}\{V_2\} - \text{Im}\{V_1\}\text{Re}\{V_2\}}{\text{Re}^2\{V_1\} + \text{Im}^2\{V_1\}} = \underbrace{\frac{1}{\omega_{01}} \cdot \text{Im}\{G_2\} \cdot K_{CN} \cdot \dot{m}}_{E} + \underbrace{\frac{1}{\omega_{01}} \cdot \text{Im}\{G_2\} \cdot K_V}_{N}$$

$$\approx \frac{1}{\omega_{01}} \cdot \frac{\dfrac{1}{m_2}\omega_{01}}{\omega_{02}^2 + j\underbrace{2D_2\omega_{02}\omega_{01}}_{=0} - \omega_{01}^2}\left(K_{CN} \cdot \dot{m} + K_V\right)$$

$$\approx \frac{\omega_{02}^2}{\omega_{02}^2 - \omega_{01}^2} \cdot \frac{1}{c_2}\left(K_{CN} \cdot \dot{m} + K_V\right)$$

| | |
|---|---|
| $\Delta t$ | Zeitliche Verschiebung der beiden Sensorsignale |
| $\omega_{01}$ | Eigen(kreis)frequenz der ersten Eigenform (Antriebmodus) |
| $\omega_{02}$ | Eigen(kreis)frequenz der zweiten Eigenform (Messmodus, Coriolismodus) |
| $c_2$ | Federsteifigkeit der zweiten Eigenform |
| $K_{CN}$ | Beiwert des Normalmodus (Erste Eigenform als Antriebmodus) |
| $\dot{m}$ | Massedurchfluss |
| $K_v$ | Geschwindigkeitsproportionale Kopplung der beiden Eigenformen ohne Massedurchfluss |
| $\text{Re}\{V_1\}$ | Realteil der Geschwindigkeit der ersten Eigenform |
| $\text{Im}\{V_1\}$ | Imaginärteil der Geschwindigkeit der ersten Eigenform |
| $\text{Re}\{V_2\}$ | Realteil der Geschwindigkeit der zweiten Eigenform |
| $\text{Im}\{V_2\}$ | Imaginärteil der Geschwindigkeit der zweiten Eigenform |
| $\text{Im}\{G_2\}$ | Imaginärteil der Übertragungsfunktion der zweiten Eigenform |
| $m_2$ | Schwingende Masse der zweiten Eigenform |
| $D_2$ | normierte Dämpfungskonstante der zweiten Eigenform |

Auf der linken Seite der Gleichung steht in diesem Fall die durch Messung zugängliche Größe, nämlich die Schwingungsmessgröße $\Delta t$, auf der rechten Seite der Gleichung stehen die nicht ohne Weiteres zugänglichen internen Größen des Coriolis-Massedurchflussmessgeräts. Aus Umformung der vorstehenden Gleichung folgt:

$$\Delta t \approx \frac{1}{1 - \dfrac{\omega_{01}^2}{\omega_{02}^2}} \cdot \frac{1}{c_2}\left(K_{CN} \cdot \dot{m} + K_V\right) = f_{IK}(T, \Delta T, P, \sigma, \Delta\sigma, ...) \cdot \left(K_{CN} \cdot \dot{m} + K_V\right)$$

Damit ist offensichtlich erreicht worden, dass die Rechenvorschrift als integrale Korrekturfunktion $f_{IK}$ einen Term in den Eigenfrequenzen $f_{01}$, $f_{02}$ der Schwingungen des Messrohres 5 in der ersten Eigenform und der zweiten Eigenform aufweist, wobei die Rechenvorschrift hier keine weiteren Abhängigkeiten von den Eigenfrequenzen $f_{01}$, $f_{02}$ der Schwingungen des Messrohrs 5 in der ersten Eigenform und zweiten Eigenform zeigt. Die integrale Korrekturfunktion lautet damit:

$$f_{IK}(T, \Delta T, P, \sigma, \Delta\sigma, ...) = \frac{1}{1 - \dfrac{\omega_{01}^2}{\omega_{02}^2}} \cdot \frac{1}{c_2}$$

Schon die beiden vorstehenden Gleichungen zeigen, dass es nun möglich ist, die interessierende Medium-kenngröße $\dot{m}$ durch Umstellung der Gleichung zu ermitteln, wenn gleichzeitig Kenntnis über die Eigenfrequenzen $f_{01}$, $f_{02}$ - gleichbedeutend: Kenntnis über die Eigenkreisfrequenzen $\omega_{01}$, $\omega_{02}$ - der Schwingungen des Messrohrs 5 in der ersten Eigenform und der zweiten Eigenform besteht. Zur fortwährenden und damit immer aktuellen Bestimmung der Eigenfrequenzen $f_{01}$, $f_{02}$ der Schwingung des Messrohres 5 in der ersten Eigenform ist vorgesehen, dass das Messrohr 5 gezielt in einem Phasenregelkreis angeregt wird, wobei hier die Phasenverschiebung zwischen der Antriebskraft des elektrischen Antriebs 4 und der über den Schwingungsaufnehmer 6 erfassten Geschwindigkeitsantwort $\dot{x}$ des Messrohres 5 über eine Variation der Frequenz des Anregungssignals $u_1$, $u_2$ auf einen vorbestimmten Wert geregelt wird; im Idealfall beträgt die vorgegebene Phasendifferenz 0°.

Das Messrohr 5 wird in seiner zweiten Eigenform zur Schwingung angeregt durch die aktive Anregung der Schwingung des Messrohrs 5 in der ersten Eigenform, so dass keine gezielte separate Anregung erforderlich ist. Die Eigenfrequenz der zweiten Eigenform wird ebenfalls über einen Phasenregelkreis verfolgt. Durch diese Maßnahmen ist es stets möglich, einen durch die Störgrößen beeinflussten aktuellen Wert der Eigenfrequenzen $f_{01}$, $f_{02}$ zu gewinnen, so dass auch aktuelle und korrigierte Werte für die interessierende Mediumkenngröße $\dot{m}$ berechnet werden können.

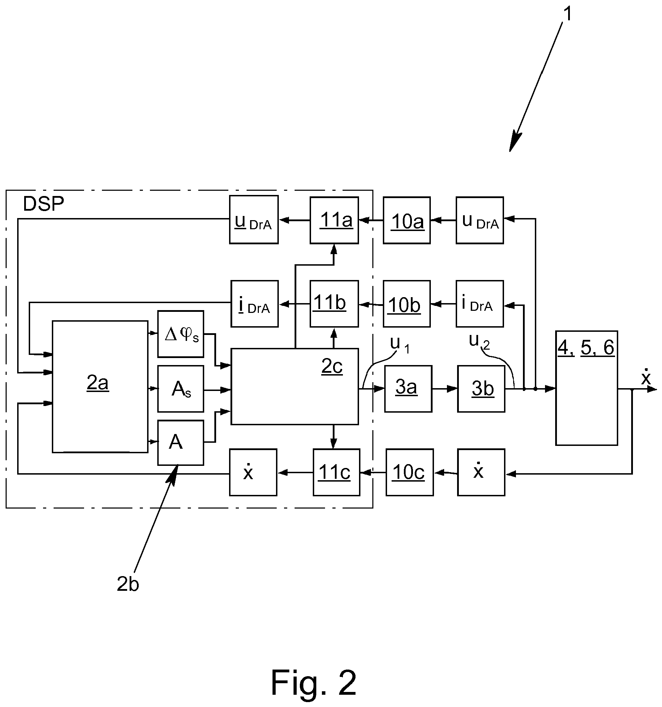

Die Phasenregelung ist in Figur 1 in einem digitalen Signalprozessor (DSP) durch den Regler 2 realisiert. In Figur 2 ist noch einmal ausführlicher dargestellt, wie Signalverläufe in den realisierten Regelungen innerhalb des Coriolis-Massedurchflussmessgeräts 1 realisiert sind. Die gestrichelte Umrandung fasst all jene Blöcke zusammen, die funktional in dem digitalen Signalprozessor (DSP) umgesetzt sind. Der Regler 2 ist hier insgesamt zergliedert dargestellt. In dem Reglerteil 2a ist unter anderem die Rechenvorschrift und die Bestimmungsgleichung für die interessierende Medium-kenngröße $\dot{m}$ hinterlegt. In den Reglerteilen 2b sind die eigentlichen Regler implementiert, ganz oben beispielsweise die Phasenregelung, in der Mitte eine Amplitudenregelung und darunter eine Amplitudensteuerung. Die Ausgänge der Regler 2b sind Stellgrößen, die von dem darauffolgenden Signalgenerator 2c umgesetzt werden. Zur Anregung des Messrohrs 5 werden in dem Signalgenerator 2c zunächst zwei orthogonale harmonische Anregungssignale generiert, aus denen zusammen das Reglerausgangssignal $u_1$ erzeugt wird. Die ebenfalls harmonischen Messgrößen, die über Analog/Digital-Wandler 10a, 10b dem DSP wieder zugeführt werden, werden in den Modulatoren 11a, 11b mit Hilfe der orthogonalen Basissignale des Signalgenerators 2c in Signalkomponenten zerlegt, die die Bestimmung der Phasenlage der Signale in Bezug auf das Basissignal gestatten, so dass nach der Demodulation eine Phaseninformation bezogen auf das Ausgangssignal des Signalgenerators 2c vorliegt. Die harmonischen Messgrößen bestehen vorliegend in der Antriebklemmenspannung $u_{DrA}$ und dem Antrieb-Klemmenstrom $i_{DrA}$. Als Schwingungsmessgröße wird die Messrohr-geschwindigkeit $\dot{x}$ erfasst und dem DSP wieder zugeführt, woraus schließlich auch die Phaseninformation gewonnen werden kann.

Die nachfolgenden Gleichungen zeigen die zuvor hergeleiteten Zusammenhänge noch einmal unter Verwendung der schon erläuterten Kenngrößen Empfindlichkeit E und Nullpunkt N. Es ist so ersichtlich, dass der zeitliche Versatz - also die Phaseverschiebung - zwischen der ein- und auslaufseitigen Messrohrschwingung $\Delta t$ durch eine Geradengleichung in Abhängigkeit von dem Massedurchsatz $\dot{m}$ dargestellt werden kann. In der Korrekturfunktion $f_{IK}$ bzw. der vereinfachten Korrekturfunktion $f_{IKV}$ ohne die Federsteifigkeit $c_2$ des Messrohres 5 in der zweiten Eigenform finden die Einflüsse der Störgrößen Berücksichtigung, soweit sich diese auf die Eigenfrequenzen $f_{01}$, $f_{02}$ des Messrohres 5 in der ersten Eigenform und der zweiten Eigenform auswirken.

$$\Delta t = \frac{1}{1 - \dfrac{\omega_{01}^2}{\omega_{02}^2}} \cdot \frac{1}{c_2} \left( K_{CN} \cdot \dot{m} + K_V \right) = E \cdot \dot{m} + N$$

$$E = \frac{1}{1 - \dfrac{\omega_{01}^2}{\omega_{02}^2}} \cdot \frac{1}{c_2} \cdot K_{CN} = f_{IKV} \cdot \frac{1}{c_2} \cdot K_{CN} = f_{IK} \cdot K_{CN}$$

$$N = \frac{1}{1 - \dfrac{\omega_{01}^2}{\omega_{02}^2}} \cdot \frac{1}{c_2} \cdot K_V = f_{IKV} \cdot \frac{1}{c_2} \cdot K_V = f_{IK} \cdot K_V$$

E     Empfindlichkeit
N     Nullpunkt
$f_{IK V}$     vereinfachte Korrekturfunktion
$f_{IK}$     Korrekturfunktion

Bei der Werkskalibrierung der Coriolis-Massedurchflussmessgeräte 1 können unter anderem die Initialwerte für die Empfindlichkeit $E_{In}$, den Nullpunkt $N_{In}$, die vereinfachte Korrekturfunktion $f_{IKV,In}$ und die Korrekturfunktion $f_{IK,In}$ bestimmt und beispielsweise für einen späteren Vergleich abgelegt werden. Bei einer solchen Werkskalibrierung werden die Werte für den Nullpunkt N und die Werte für die Korrekturfunktionen $f_{IKV}$, $f_{IK}$ vorzugsweise dann bestimmt, wenn der Durchfluss $\dot{m}$, gleich Null ist. Es kommen dann die folgenden gleichungsmäßigen Zusammenhänge zum Einsatz:

$$\dot{m}_K = 0 \Rightarrow$$

$$\Delta t_{\dot{m}=0} = \frac{1}{1 - \frac{\omega_{01,In}^2}{\omega_{02,In}^2}} \cdot \frac{1}{c_{2,In}} \cdot K_V = N_{In}$$

$$f_{IKV,In} = \frac{1}{1 - \frac{\omega_{01,In}^2}{\omega_{02,In}^2}}$$

$$f_{IK,In} = \frac{1}{1 - \frac{\omega_{01,In}^2}{\omega_{02,In}^2}} \cdot \frac{1}{c_{2,In}}$$

$$N_{In} = f_{IKV,In} \cdot \frac{1}{c_{2,In}} \cdot K_V = f_{IK,In} \cdot K_V$$

Die Empfindlichkeit E wird dann bei einem vorgegebenen bekannten Durchfluss bestimmt, nämlich anhand der nachfolgenden Gleichungen:

$$\dot{m} = \dot{m}_K \Rightarrow$$

$$\Delta t_{\dot{m}=\dot{m}_K} = \frac{1}{1 - \frac{\omega_{01,In}^2}{\omega_{02,In}^2}} \cdot \frac{1}{c_{2,In}} \left( K_{CN} \cdot \dot{m}_K + K_V \right) = E_{In} \cdot \dot{m}_K + N_{In}$$

$$E_{In} = \frac{1}{1 - \frac{\omega_{01,In}^2}{\omega_{02,In}^2}} \cdot \frac{1}{c_{2,In}} \cdot K_{CN} = \frac{\Delta t_{\dot{m}=\dot{m}_K} - N_{In}}{\dot{m}_K}$$

$$E_{In} = f_{IKV,In} \cdot \frac{1}{c_{2,In}} \cdot K_{CN} = f_{IK,IN} \cdot K_{CN}$$

Verändern die Störungen und Querempfindlichkeiten die Eigenschaften des Coriolis-Massedurchflussmessgeräts 1 während des Betriebs nicht, so lautet die Bestimmungsgleichung für den Massedurchfluss einfach:

$$\dot{m} = \frac{\Delta t_{\dot{m}}}{E_{In}} - N_{In}$$

In dem vorgenannten Fall kann mit den Initialwerten weitergerechnet werden. Eine Veränderung der charakteristischen Größen des Coriolis-Massedurchflussmessgeräts ist beobachtbar durch die Nachverfolgung der Eigenfrequenzen $f_{01}$, $f_{02}$ der Schwingungen des Messrohrs 5 in den Eigenformen. Liegen derartige Veränderungen vor, müssen die Korrekturfunktionen berechnet werden, wobei die aktuellen Werte der Korrekturfunktionen $f_{IKV,Ak}$ und $f_{IK,Ak}$ erhalten werden, indem die aktuellen Werte für die Eigen(kreis)frequenzen $f_{01}$, $f_{02}$ sowie die Federsteifigkeit des Messrohrs 5 in der zweiten Eigenform (Coriolis-Modus) bestimmt und eingesetzt werden:

$$f_{IKV,Ak} = \frac{1}{1 - \dfrac{\omega_{01,Ak}^2}{\omega_{02,Ak}^2}}$$

$$f_{IK,Ak} = \frac{1}{1 - \dfrac{\omega_{01,Ak}^2}{\omega_{02,Ak}^2}} \cdot \frac{1}{c_{2,Ak}}$$

Der Indexzusatz "$Ak$" kennzeichnet dabei jeweils den aktuellen Wert der betreffenden Größe. Auf dieser Grundlage lassen sich die aktuellen Werte des Nullpunkt $N_{Ak}$ und der Empfindlichkeit $E_{Ak}$ berechnen:

$$N_{Ak} = f_{IKV,Ak} \cdot \frac{1}{c_{2,Ak}} \cdot K_V = f_{IK,Ak} \cdot K_V = f_{IK,Ak} \cdot \frac{N_{In}}{f_{IK,In}}$$

$$E_{Ak} = f_{IKV,Ak} \cdot \frac{1}{c_{2,Ak}} \cdot K_{CN} = f_{IK,Ak} \cdot K_{CN} = f_{IK,Ak} \cdot \frac{E_{In}}{f_{IK,In}}$$

Die nicht korrigierte zeitliche Verschiebung der Geschwindigkeitssignale (der Indexzusatz NK kennzeichnet jeweils den nicht korrigierten Wert):

$$\Delta t_{\dot{m},NK} = \frac{1}{1 - \dfrac{\omega_{01,Ak}^2}{\omega_{02,Ak}^2}} \cdot \frac{1}{c_{2,Ak}} \left( K_{CN} \cdot \dot{m} + K_V \right) = E_{Ak} \cdot \dot{m} + N_{Ak}$$

Der nicht korrigierte aktuelle Wert des Massedurchflusses $\dot{m}_{NK}$ lautet damit dann:

$$\dot{m}_{NK} = \frac{\Delta t_{\dot{m},NK}}{E_{In}} - N_{In}$$

Die Korrektur des Messwertes für den Durchfluss $\dot{m}$ kann nunmehr über die Berücksichtigung des aktuellen Nullpunkts N und der aktuellen Empfindlichkeit E erfolgen, wobei der Indexzusatz $K_0$ den korrigierten Wert kennzeichnet:

$$\dot{m}_{Ko.} = \frac{\Delta t_{\dot{m},NKo.}}{E_{Ak}} - N_{Ak} = \frac{1}{E_{In}} \cdot \frac{f_{IK,In}}{f_{IK,Ak}} \cdot \Delta t_{\dot{m},NKo.} - \frac{f_{IK,Ak}}{f_{IK,In}} \cdot N_{In}$$

Die Korrektur des Messwertes für den Durchfluss kann bevorzugt über die Korrektur der zeitlichen Verschiebung der Geschwindigkeitssignale durchgeführt werden, also mit:

$$\Delta t_{\dot{m},NKo.} = E_{Ak} \cdot \dot{m} + N_{Ak} = f_{IK,Ak} \cdot \frac{E_{In}}{f_{IK,In}} \cdot \dot{m} + f_{IK,Ak} \cdot \frac{N_{In}}{f_{IK,In}} = \frac{f_{IK,Ak}}{f_{IK,In}} \underbrace{(E_{In} \cdot \dot{m} + N_{In})}_{\Delta t_{\dot{m},Ko.}} \Rightarrow$$

$$\Delta t_{\dot{m},Ko.} = \frac{f_{IK,In}}{f_{IK,Ak}} \cdot \Delta t_{\dot{m},NKo.}$$

Mit dem vorstehenden Ergebnis ergibt sich der korrigierte Wert des Massedurchflusses $\dot{m}$ zu:

$$\dot{m}_{Ko.} = \frac{\Delta t_{\dot{m},Ko.}}{E_{In}} - N_{In}$$

Der Vergleich von aktuellen Parametern der Rechenvorschrift mit Werten für die gleichen Parameter der Rechenvorschrift zu einem initialen Zeitpunkt ermöglicht in ganz unterschiedlicher Weise die Realisierung von Diagnosefunktionen. Dazu wird ein geeigneter Parameter der Rechenvorschrift zu einem initialen Zeitpunkt bestimmt und der so erhaltene Initialwert des Parameters wird mit einem zu einem späteren Zeitpunkt bestimmten aktuellen Wert des Parameters verglichen. Dann kann beispielsweise bei Überschreiten einer vorgegebenen maximalen Abweichung des aktuellen Parameters von dem Initialwert des Parameters ein Signal ausgegeben werden. Dies kann beispielsweise durch den nachfolgenden Zusammenhang realisiert werden ("abs" bezeichnet den Betrag des betreffenden Ausdrucks):

$$abs(\frac{\Delta f_{IK,Ak}}{f_{IK,In}}) = abs(\frac{f_{IK,Ak} - f_{IK,In}}{f_{IK,In}}) > K_{Schwellwert} \Rightarrow Status - Signal$$

Natürlich können auch die Abweichungen der charakteristischen Größen des Coriolis-Massedurchflussmessgeräts bezüglich ihrer Initialwerte für Diagnosezwecke herangezogen werden, was wie folgt realisiert werden könnte:

$$abs(\Delta E) = abs(\frac{E_{Ak} - E_{In}}{E_{In}}) = abs(\frac{f_{IK,Ak}}{f_{IK,In}} - 1) > K_{Schwellwert} \Rightarrow Status - Signal$$

$$abs(\Delta N) = abs(\frac{N_{Ak} - N_{In}}{N_{In}}) = abs(\frac{f_{IK,Ak}}{f_{IK,In}} - 1) > K_{Schwellwert} \Rightarrow Status - Signal$$

Entsprechende Korrekturen der Messwerte und von charakteristischen Größen sowie die Generierung der Statussignale lassen sich mit der vereinfachten Korrekturfunktion durchführen, wobei hier eine Korrektur der Federsteifigkeit des Coriolis-Modus mit Hilfe der gemessenen Temperatur durchgeführt wird.

**Patentansprüche**

1. Verfahren zum Betreiben eines Coriolis-Massedurchflussmessgeräts (1) mit wenigstens einer elektrischen Stelleinrichtung (3), wenigstens einem elektrischen Antrieb (4) als Schwingungserzeuger, mit wenigstens einem mit einem Medium wechselwirkenden Messrohr (5) und mit wenigstens einem Schwingungsaufnehmer (6), wobei die elektrische Stelleinrichtung (3) ein elektrisches Anregungssignal zur Anregung des elektrischen Antriebs (4) bereitstellt und der elektrische Antrieb (4) das Messrohr (5) zur Schwingung in wenigstens einer ersten Eigenform anregt, die angeregte Schwingung des Messrohrs (5) von dem Schwingungsaufnehmer (6) als Schwingungsmessgröße ($x, \dot{x}, \Delta t$) erfasst wird und wobei der Massedurchfluss $\dot{m}$ als wenigstens eine mit dem Medium in Bezug stehende Mediumkenngröße ($\dot{m}$) mit Hilfe der Schwingungsmessgröße ($\Delta t$) mittels einer Rechenvorschrift berechnet wird, dass während des Betriebs des Coriolis-Massedurchflussmessgeräts (1) die Eigenfrequenz ($f_{01}$) der Schwingung des Messrohrs (5) in der ersten Eigenform bestimmt wird, dass während des Betriebs des Coriolis-Massedurchflussmessgeräts (1) die Eigenfrequenz ($f_{02}$) der Schwingung des Messrohrs (5) in wenigstens einer zweiten Eigenform bestimmt wird, dass die Rechenvorschrift einen mathematischen Zusammenhang zwischen der Schwingungsmessgröße ($\Delta t$), der Mediumkenngröße ($\dot{m}$) und den Eigenfrequenzen ($f_{01}, f_{02}$) der Schwingungen des Messrohrs (5) in der ersten Eigenform und der zweiten Eigenform herstellt,

**dadurch gekennzeichnet,**

**dass** die Mediumkenngröße ($\dot{m}$) unter Berücksichtigung der aktuell bestimmten Eigenfrequenzen ($f_{01}$, $f_{02}$) der Schwingungen des Messrohrs (5) in der ersten Eigenform und der zweiten Eigenform sowie der Schwingungsmessgröße ($\Delta t$) bestimmt wird,

wobei die Rechenvorschrift als integrale Korrekturfunktion $f_{IK}$ einen Term in den Eigenfrequenzen ($f_{01}$, $f_{02}$) der Schwingungen des Messrohrs (5) in der ersten Eigenform und der zweiten Eigenform aufweist und die Rechenvorschrift keine weiteren Abhängigkeiten von den Eigenfrequenzen ($f_{01}$, $f_{02}$) der Schwingungen des Messrohrs (5) in der ersten Eigenform und der zweiten Eigenform aufweist,

wobei der von den Eigenfrequenzen ($f_{01}$, $f_{02}$) der Schwingungen des Messrohrs (5) in der ersten Eigenform und der zweiten Eigenform abhängige Term der integralen Korrekturfunktion $f_{IK}$ die folgende Form aufweist

$$\frac{1}{1-\frac{\omega_{01}^2}{\omega_{02}^2}}$$

wobei $\omega_{01}$ die Eigenkreisfrequenz der Schwingung in der ersten Eigenform und $\omega_{02}$ die Eigenkreisfrequenz der Schwingung in der zweiten Eigenform ist,

und **dass** durch die fortwährende Messung der Eigenfrequenzen ($f_{01}$, $f_{02}$) während des Betriebs des Coriolis-Massedurchflussmessgeräts auch fortwährend die integralen Einflüsse von Störgrößen messtechnisch abgebildet werden und durch die herangezogene Rechenvorschrift bei der Ermittlung der Mediumkenngröße ($\dot{m}$) berücksichtigt werden, ohne dass die einzelnen funktionalen Zusammenhänge der Wirkung verschiedener Störgrößen auf die Mediumkenngröße ($\dot{m}$) und ihre Abhängigkeiten untereinander bekannt sein müssen.

2. Verfahren nach Anspruch 1, **dadurch gekennzeichnet, dass** die Eigenfrequenz ($f_{01}$) der Schwingung des Messrohrs (5) in der ersten Eigenform bestimmt wird und/oder dass die Eigenfrequenz ($f_{02}$) der Schwingung des Messrohrs (5) in der zweiten Eigenform bestimmt wird durch gezielte Anregung des Messrohrs (5) in einem Phasenregelkreis, insbesondere wobei die Phasenverschiebung zwischen der Antriebskraft des elektrischen Antriebs (4) und der über den Schwingungsaufnehmer (6) erfassten Geschwindigkeitsantwort ($\dot{x}$) des Messrohrs (5) über eine Variation der Frequenz des Anregungssignals ($21_1$, $21_2$) auf einen vorbestimmten Wert geregelt wird.

3. Verfahren nach Anspruch 1 oder 2, **dadurch gekennzeichnet, dass** die Schwingung des Messrohrs (5) in der zweiten Eigenform angeregt wird durch die aktive Anregung der Schwingung des Messrohrs (5) in der ersten Eigenform aufgrund von strukturellen Asymmetrien und/oder durch Anregung über den Prozess, insbesondere wobei die Eigenfrequenz der zweiten Eigenform über einen Phasenregelkreis verfolgt wird.

4. Verfahren nach einem der Ansprüche 1 bis 3, **dadurch gekennzeichnet, dass** die integrale Korrekturfunktion $f_{IK}$ zusätzlich abhängig ist von der Federsteifigkeit $c_2$ des Messrohrs (5) in der Schwingung in der zweiten Eigenform, insbesondere wobei die integrale Korrekturfunktion $f_{IK}$ damit die folgende Form aufweist

$$f_{IK}(T,\Delta T,P,\sigma,\Delta\sigma,...)=K\cdot\frac{1}{1-\frac{\omega_{01}^2}{\omega_{02}^2}}\cdot\frac{1}{c_2}$$

5. Verfahren nach einem der Ansprüche 1 bis 4, **dadurch gekennzeichnet, dass** die mit dem Medium in Bezug stehende Mediumkenngröße ($\dot{m}$), die Schwingungsmessgröße ($\Delta t$), die Eigenfrequenz ($f_{01}$) der Schwingung des Messrohrs (5) in der ersten Eigenform und die Eigenfrequenz ($f0_2$) der Schwingung des Messrohrs (5) in der zweiten Eigenform gemäß nachstehender Rechenvorschrift in Zusammenhang stehen:

$$\Delta t \approx \frac{1}{1-\frac{\omega_{01}^2}{\omega_{02}^2}}\cdot\frac{1}{c_2}\left(K_{CN}\cdot\dot{m}+K_V\right)=f_{IK}(T,\Delta T,P,\sigma,\Delta\sigma,...)\cdot\left(K_{CN}\cdot\dot{m}+K_V\right)$$

wobei $\omega_{01}$ die Eigenkreisfrequenz der Schwingung in der ersten Eigenform und $\omega_{02}$ die Eigenkreisfrequenz der Schwingung in der zweiten Eigenform ist.

6. Verfahren nach einem der Ansprüche 1 bis 5, **dadurch gekennzeichnet, dass** mindestens ein Parameter der Rechenvorschrift zu einem initialen Zeitpunkt bestimmt wird und der so erhaltene Initialwert des Parameters mit einem zu einem späteren Zeitpunkt bestimmten aktuellen Wert des Parameters verglichen wird und bei Überschreiten einer vorgegeben maximalen Abweichung des aktuellen Parameterwertes von dem Initialwert des Parameters ein Signal ausgegeben wird.

7. Verfahren nach Anspruch 6, **dadurch gekennzeichnet, dass** es sich bei dem Parameter der Rechenvorschrift um den Wert der Korrekturfunktion ($f_{IK}$) oder den Nullpunkt ($N$) oder die Empfindlichkeit ($E$) des Coriolis-Massedurchflussmessgeräts (1) handelt.

**Claims**

1. Method for operating a Coriolis mass flowmeter (1) having at least one electric setting device (3), at least one electric drive (4) as oscillation generator, having at least one measuring tube (5) interacting with a medium and having at least one oscillation sensor (6), wherein the electric setting device (6) provides an electric excitation signal for exciting the electric drive (4) and the electric drive (4) excites the measuring tube (5) into oscillation in at least one first natural mode, the excited oscillation of the measuring tube (5) is detected by the oscillation sensor (6) as an oscillation measuring variable ($x, \dot{x}, t$) and wherein the mass flow ($\dot{m}$) as the at least one medium parameter relating to the medium is calculated with the aid of the oscillation measuring variable ($t$) by means of a calculation rule, that the eigenfrequency ($f_{01}$) of the oscillation of the measuring tube (5) is determined in the first natural mode during operation of the Coriolis mass flowmeter (1), that the eigenfrequency ($f_{02}$) of the oscillation of the measuring tube (5) is determined in at least one second natural mode during operation of the Coriolis mass flowmeter, that the calculation rule represents a mathematic relation between the oscillation measuring variable ($t$), the medium parameter ($\dot{m}$) and the eigenfrequencies ($f_{01}, f_{02}$) of the oscillations of the measuring tube (5) in the first natural mode and the second natural mode,
   **characterized in**
   **that** the medium parameter ($\dot{m}$) is determined taking into consideration the current determined eigenfrequencies ($f_{01}, f_{02}$) of the oscillations of the measuring tube (5) in the first natural mode and the second natural mode as well as the oscillation measuring variable ($t$),
   **that** the calculation rule has a term for the eigenfrequencies ($f_{01}, f_{02}$) of the oscillations of the measuring tube (5) in the first natural mode and the second natural mode as an integral correction function $f_{IK}$, and the calculation rule has no further dependencies on the eigenfrequencies ($f_{01}, f_{02}$) of the oscillations of the measuring tube (5) in the first natural mode and the second natural mode,
   wherein the term for the integral correction function $f_{IK}$ depending on the eigenfrequencies ($f_{01}, f_{02}$) of the oscillations of the measuring tube (5) in the first natural mode and the second natural mode has the following form

$$\frac{1}{1-\dfrac{\omega_{01}^{2}}{\omega_{02}^{2}}}$$

   wherein $\omega_{01}$ is the circular eigenfrequency of the oscillation in the first natural mode and $\omega_{02}$ is the circular eigen-frequency of the oscillation in the second natural mode, and
   **that** by continually measuring the eigenfrequencies ($f_{01}, f_{02}$) during operation of the Coriolis mass flowmeter, the integral influences of the of disturbances can be mapped and can be taken into consideration in determining the medium parameters ($\dot{m}$) with the used calculation rule without the individual functional relations of the effect of different interferences on the medium parameters $\dot{m}$) and its dependencies having to be known.

2. Method according to claim 1, **characterized in that** the eigenfrequency ($f_{01}$) of the oscillation of the measuring tube (5) is determined in the first natural mode and/or that the eigenfrequency ($f_{02}$) of the oscillation of the measuring tube (5) is determined in the second natural mode by specifically exciting the measuring tube (5) in a phase-locked loop, in particular wherein the phase shift between the driving force of the electric drive (4) and the velocity response ($\dot{x}$) of the measuring tube (5) detected via the oscillation sensor (6) is regulated using a variation of the frequency of the excitation signal ($21_1, 21_2$) at a predetermined value.

3. Method according to claim 1 or 2, **characterized in that** the oscillation of the measuring tube (5) is excited in the second natural mode by actively exciting the oscillation of the measuring tube (5) in the first natural mode based on structural asymmetries and/or by excitation using the process, in particular wherein the eigenfrequency of the second natural mode is tracked via a phase-locked loop.

4. Method according to any one of claims 1 to 3, **characterized in that** the integral correction function $f_{IK}$ is additionally dependent on the spring stiffness $c_2$ of the measuring tube (5) in oscillation in the second natural mode, in particular wherein the integral correction function $f_{IK}$ has the following form thereby

$$f_{IK}(T, \Delta T, P, \sigma, \Delta \sigma, ...) = K \cdot \frac{1}{1 - \dfrac{\omega_{01}^2}{\omega_{02}^2}} \cdot \frac{1}{c_2}.$$

5. Method according to any one of claims 1 to 4, **characterized in that** the medium parameter ($\dot{m}$) pertaining to the medium, the oscillation measuring variable ($t$), the eigenfrequency ($f_{01}$) of the oscillation of the measuring tube (5) in the first natural mode and the eigenfrequency ($f_{02}$) of the oscillation of the measuring tube (5) in the second natural mode correlate to one another according to the following calculation rule:

$$\Delta t \approx \frac{1}{1 - \dfrac{\omega_{01}^2}{\omega_{02}^2}} \cdot \frac{1}{c_2} \left( K_{CN} \cdot \dot{m} + K_V \right) = f_{IK}(T, \Delta T, P, \sigma, \Delta \sigma, ...) \cdot \left( K_{CN} \cdot \dot{m} + K_V \right)$$

wherein $\omega_{01}$ is the circular eigenfrequency of the oscillation in the first natural mode and $\omega_{02}$ is the circular eigenfrequency of the oscillation in the second natural mode.

6. Method according to any one of claims 1 to 5, **characterized in that** at least one parameter of the calculation rule is determined at an initial point in time and the initial value obtained in this manner is compared to a current value of the parameter determined at a later point in time and a signal is issued when a predetermined maximum deviation of the current parameter value from the initial value of the parameter is exceeded.

7. Method according to claim 6, **characterized in that** the parameter of the calculation rule is the value of the correction function ($f_{IK}$) or the zero point ($N$) or the sensitivity ($E$) of the Coriolis mass flowmeter (1).

**Revendications**

1. Procédé destiné au fonctionnement d'un débitmètre massique à effet Coriolis (1), avec au moins un mécanisme de réglage (3) électrique, au moins un entraînement (4) électrique, lequel se présente sous la forme d'un générateur de vibrations, avec au moins un tube de mesure (5), lequel interagit avec un milieu, et avec au moins un capteur de vibrations (6) ;
dans lequel le mécanisme de réglage (3) électrique met en oeuvre un signal d'excitation électrique en vue de l'excitation de l'entraînement (4) électrique ; et
dans lequel l'entraînement (4) électrique excite le tube de mesure (5) en vue de la vibration dans au moins une première forme propre ;
dans lequel la vibration excitée du tube de mesure (5) est détectée par le capteur de vibrations (6) sous la forme d'une variable de mesure des vibrations (x, ẋ, Δt) ; et
dans lequel le débit massique « m » est calculé sous la forme d'au moins une variable de référence du milieu (m), laquelle se trouve en rapport avec le milieu, à l'aide de la variable de mesure des vibrations (Δt), en se référant à une règle de calcul spécifique ;
**caractérisé en ce que**,
la fréquence propre ($f_{01}$) de la vibration du tube de mesure (5) dans la première forme propre est déterminée pendant le fonctionnement du débitmètre massique à effet Coriolis (1) ;
**caractérisé en ce que**,
la fréquence propre ($f_{02}$) de la vibration du tube de mesure (5) dans au moins une deuxième forme propre est déterminée pendant le fonctionnement du débitmètre massique à effet Coriolis (1) ;
**caractérisé en ce que**,
la règle de calcul établit une relation mathématique entre la variable de mesure des vibrations (Δt), la variable de référence du milieu (m) et les fréquences propres ($f_{01}$, $f_{02}$) des vibrations du tube de mesure (5) dans la première forme propre et dans la deuxième forme propre ;
**caractérisé en ce que**
la variable de référence du milieu (m) est déterminée en prenant en compte les fréquences propres ($f_{01}$, $f_{02}$) actuellement déterminées des vibrations du tube de mesure (5) dans la première forme propre et dans la deuxième forme propre, ainsi que dans la variable de mesure des vibrations ($\Delta t$) ;
dans lequel la règle de calcul présente, sous la forme d'une équation de correction intégrale ($f_{IK}$), un terme dans les fréquences propres ($f_{01}$, $f_{02}$) des vibrations du tube de mesure (5), dans la première forme propre et dans la deuxième forme propre, et la règle de calcul ne présente aucun autre lien de dépendance avec les fréquences propres ($f_{01}$, $f_{02}$) des vibrations du tube de mesure (5) dans la première forme propre et dans la deuxième forme propre ;
dans lequel le terme de l'équation de correction intégrale ($f_{IK}$) se présente sous la forme suivante, lequel terme dépend des fréquences propres ($f_{01}$, $f_{02}$) des vibrations du tube de mesure (5) dans la première forme propre et dans la deuxième forme propre :

$$\cfrac{1}{1 - \cfrac{\omega_{01}^2}{\omega_{02}^2}}$$

dans lequel $\omega_{01}$ correspond à la fréquence du propre circuit de la vibration dans la première forme propre et $\omega_{02}$ correspond à la fréquence du propre circuit de la vibration dans la deuxième forme propre ; et
**caractérisé en ce que**
les influences intégrales de variables de perturbation sont également représentées en continu, sur le plan de la technique de mesure, par la mesure en continu des fréquences propres ($f_{01}$, $f_{02}$) pendant le fonctionnement du débitmètre massique à effet Coriolis et sont prises en compte lors de la détermination de la variable de référence du milieu (m), par la règle de calcul utilisée, sans que les diverses relations fonctionnelles individuelles de l'effet des différentes variables de perturbation sur la variable de référence du milieu ($\dot{m}$), ainsi que leur lien de dépendance entre elles ne doivent nécessairement être connues.

2. Procédé selon la revendication 1, **caractérisé en ce que** la fréquence propre ($f_{01}$) de la vibration du tube de mesure (5) est déterminée dans la première forme propre et/ou **caractérisé en ce que** la fréquence propre ($f_{02}$) de la vibration du tube de mesure (5) est déterminée dans la deuxième forme propre par une excitation ciblée du tube de mesure (5) dans une boucle à verrouillage de phase, en particulier dans lequel le décalage de phase entre la force d'entraînement de l'entraînement (4) électrique et la réponse de la vitesse ($\dot{x}$) du tube de mesure (5), laquelle est détectée par l'intermédiaire du capteur de vibrations (6), est régulé au moyen d'une variation de la fréquence du signal d'excitation ($21_1$, $21_2$) par rapport à une valeur prédéterminée.

3. Procédé selon la revendication 1 ou 2, **caractérisé en ce que** la vibration du tube de mesure (5) est excitée dans la deuxième forme propre par l'intermédiaire de l'excitation active de la vibration du tube de mesure (5) dans la première forme propre sur la base d'asymétries structurelles et/ou par l'intermédiaire de l'excitation sur le processus, en particulier dans lequel la fréquence propre de la deuxième forme propre est suivie par une boucle à verrouillage de phase.

4. Procédé selon l'une des revendications 1 à 3,
**caractérisé en ce que** l'équation intégrale de correction ($f_{IK}$) dépend en outre de la raideur de ressort « $c_2$ » du tube de mesure (5) dans la vibration dans la deuxième forme propre, en particulier dans lequel l'équation intégrale de correction ($f_{IK}$) présente par conséquent la forme suivante :

$$f_{IK}(T, \Delta T, P, \sigma, \Delta\sigma, \ldots) = K \cdot \cfrac{1}{1 - \cfrac{\omega_{01}^2}{\omega_{02}^2}} \cdot \cfrac{1}{c_2} \; .$$

5. Procédé selon l'une des revendications 1 à 4,
**caractérisé en ce que** la variable de référence du milieu (m), laquelle se trouve en rapport avec le milieu, la variable de mesure des vibrations ($\Delta t$), la fréquence propre ($f_{01}$) de la vibration du tube de mesure (5) dans la première forme propre et la fréquence propre ($f_{02}$) de la vibration du tube de mesure (5) dans la deuxième forme propre se trouvent en relation conformément à la règle de calcul suivante :

$$\Delta t \approx \frac{1}{1 - \dfrac{\omega_{01}^2}{\omega_{02}^2}} \cdot \frac{1}{c_2} \left( K_{CN} \cdot \dot{m} + K_V \right) = f_{IK}(T, \Delta T, P, \sigma, \Delta \sigma, \ldots) \cdot \left( K_{CN} \cdot \dot{m} + K_V \right)$$

dans lequel $\omega_{01}$ correspond à la fréquence du propre circuit de la vibration dans la première forme propre et $\omega_{02}$ correspond à la fréquence du propre circuit de la vibration dans la deuxième forme propre.

6. Procédé selon l'une des revendications 1 à 5,
**caractérisé en ce que** au moins un paramètre de la règle de calcul est déterminé à un moment initial et la valeur initiale ainsi obtenue du paramètre est comparée à une valeur de paramètre actuelle, laquelle est déterminée à un moment ultérieur, et un signal est émis en cas de dépassement d'un écartement maximal prédéfini de la valeur actuelle du paramètre par rapport à la valeur initiale du paramètre.

7. Procédé selon la revendication 6, **caractérisé en ce que** le paramètre proprement dit de la règle de calcul correspond à la valeur de l'équation de correction ($f_{IK}$) ou au point zéro (N) ou à la sensibilité (E) du débitmètre massique à effet Coriolis (1).

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 20070195547 A2
- EP 0758843 A1
- WO 0101086 A1
- DE 10002635 A1
- DE 102011100092 A1